# EUROPEAN PATENT SPECIFICATION

(11) **EP 2 107 578 B1**
(45) Date of publication and mention of the grant of the patent: **11.05.2016**
(21) Application number: 08251273.2
(22) Date of filing: 31.03.2008
(51) Int. Cl.: H01G 4/12, H01G 4/005

(54) **Multi-layer ceramic capacitor**
Mehrschicht-Keramikkondensator
Condensateur céramique multicouche

(43) Date of publication of application: 07.10.2009
(73) Proprietor: Samsung Electro-Mechanics Co., Ltd, Suwon Gyunggi-do 443-743 (KR)
(72) Inventor: Kim, Dae Hwan, Gyunggi-do (KR); Song, Tae Ho, Gyunggi-do (KR); Kim, Hyung Joon, Gyunggi-do (KR); Lee, Jong Ho, Gyunggi-do (KR); Lee, Chul Seung, Seoul (KR)
(74) Representative: Mounteney, Simon James

(56) References cited:
- EP-A- 1 553 605
- JP-A- 2004 031 940
- JP-A- 2006 135 141
- US-A- 5 668 694
- US-A1- 2007 195 484

## Description

### BACKGROUND OF THE INVENTION

### Field of the Invention

The present invention relates to a multi-layer ceramic capacitor, more particularly, in which capacitance reliability is enhanced and defects such as electrical short and cracks are reduced.

### Description of the Related Art

Of late, a smaller trend of electronic devices has led to a need for an ultra-capacity multi-layer ceramic capacitor. To this end, the multilayer ceramic capacitor is required to possess higher capacitance without increase in size. This necessitates a thinner ceramic layer, a thinner cover layer and a thinner internal electrode layer.

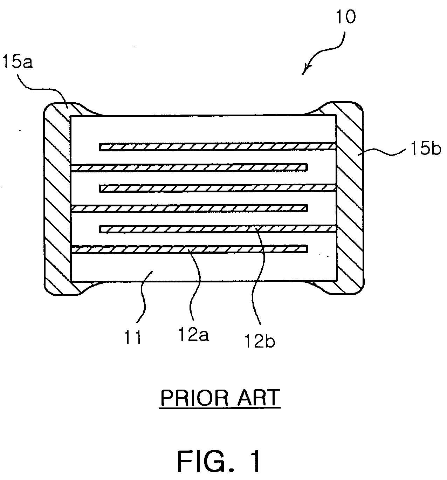

FIG. 1 is a side cross-sectional view illustrating an example of a conventional multi-layer ceramic capacitor.

Referring to FIG. 1, the multi-layer ceramic capacitor 10 includes cover layers provided on upper and lower surfaces thereof as outermost layers and a ceramic sintered body 11 having a plurality of ceramic layers disposed between the cover layers.

First and second internal electrodes 12a and 12b are arranged alternately between a corresponding one of the ceramic layers. First and second external electrodes 15a and 15b are formed on opposing sides of the ceramic sintered body 11 and connected to the first and second internal electrode 12a and 12b, respectively.

In this structure, to enhance capacitance of a capacitor without increase in size, the ceramic cover layers and internal electrodes 12a and 12b located at outermost portions need to be thinned. But this does not assure stable electrical properties of the internal electrodes 12a and 12b. Therefore, in order to allow for stable electrical properties of the internal electrodes while suppressing oxidization thereof, sintering should be performed at a reducing atmosphere where an oxygen partial pressure is regulated.

Sintering, when performed at such a reducing atmosphere having the oxygen partial pressure regulated, beneficially affects high-temperature reliability such as 150□ IR characteristics. However, the outermost internal electrodes adjacent to the relatively thinner cover layers are observed to have been oxidized.

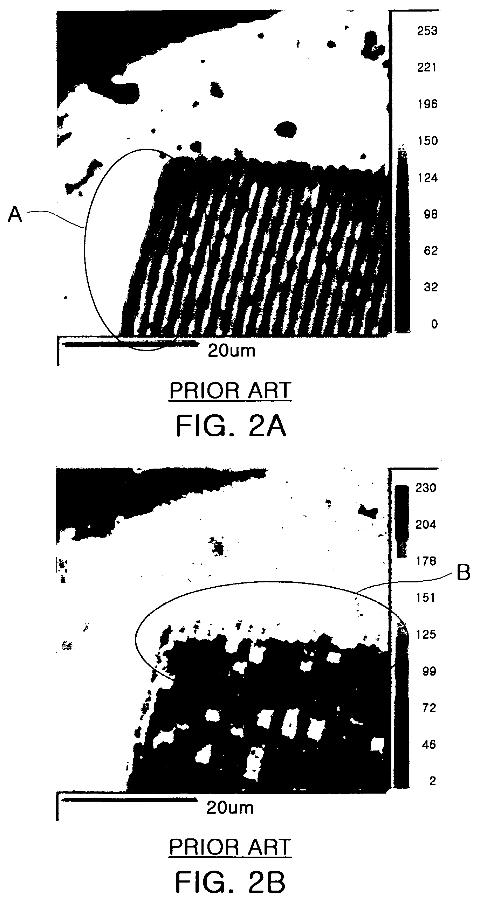

FIGS. 2A and 2B show electron probe micro analysis (EPMA) results analyzing mode of oxidization of the internal electrodes, which is caused by sintering at a reducing atmosphere having an oxygen partial pressure regulated, in manufacturing the conventional multi-layer ceramic capacitor.

With reference to the EPMA results of FIGS. 2A and 2B, oxide layers (indicated with "A" and "B") formed of an Mg-Ni-O phase are observed to have been formed on areas adjacent to the outermost portions of the internal electrodes containing e.g., Ni.

As described above, these oxide layers are formed by performing sintering at a reducing atmosphere where the oxygen partial pressure is regulated. The oxide layers trigger structural defects such as cracks in cover portions, i.e., cover cracks and deteriorates electrical properties. This as a result undermines reliability and yield of the multi-layer ceramic capacitor.

US 2007/0195484 discloses a capacitor according to the preambles of the independent claims.

US 5,668,694 discloses a further multilayer chip capacitor.

The invention is defined by the features of the independent claims.

It is provided a multilayer ceramic capacitor having an anti-oxidization structure capable of presenting defects from arising due to oxidization of internal electrodes despite sintering at a reducing atmosphere where an oxygen partial pressure is regulated.

Furthermore, there is provided a multi-layer ceramic capacitor comprising: a ceramic sintered body having cover layers provided on upper and lower surfaces thereof as outermost layers and a plurality of ceramic layers disposed between the cover layers; first and second internal electrodes formed on the ceramic layers, the first and second internal electrodes stacked to interpose one of the ceramic layers; first and second external electrodes formed on opposing sides of the ceramic sintered body to connect to the first and second internal electrodes, respectively and further electrode layers formed between the cover layers and adjacent ones of the ceramic layers, respectively. Each of the further electrode layers has a width identical to or greater than a width of the first and second internal electrodes. The further electrode layers are extended in a length direction not to contact the first and second external electrode, respectively.

The anti-oxidant electrode layers may be formed of a material identical to materials for the first and second internal electrodes. Each of the anti-oxidant electrode layers has at least an oxidized portion.

The first and second internal electrodes and the anti-oxidant electrode layers each may be formed of an Ni layer. The oxidized portion of the anti-oxidant electrode layer may be an Mg-Ni-O phase

The anti-oxidant electrode layers may be spaced apart from the first and second external electrodes at a distance of at least 5[micro]m, respectively.

It is described a ceramic sintered body having cover layers provided on upper and lower surfaces thereof as outermost layers and a plurality of ceramic layers disposed between the cover layers, first and second internal electrodes formed on the ceramic layers, and the first and second internal electrodes stacked to interpose one of the ceramic layers, first and second external electrodes formed on opposing sides of the ceramic sintered body to connect to the first and second internal electrodes, respectively and further electrode layers formed between the cover layers and adjacent ones of the ceramic layers respectively. Each of the further electrode layers is connected to a corresponding one of the external electrodes having an identical polarity to an adjacent one of the first and second internal electrodes. Each of the further electrode layers is superimposed over the entire area of the adjacent one of the first and second internal electrodes.

The anti-oxidant electrode layer may be spaced apart at a distance of at least 5µm from a corresponding one of the first and second external electrodes not connected thereto.

The anti-oxidant electrode layers adjacent to the first and second internal electrodes, respectively may include a plurality of anti-oxidant electrode layers to further prevent oxidization.

Each of the cover layers may include BaTiO3 and MgO, wherein MgO represents 0.5 mol or less with respect to 100 mol of BaTiO3.

The above and other aspects, features and other advantages of the present invention will be more clearly understood from the following detailed description taken in conjunction with the accompanying drawings, in which:
FIG. 1 is a side cross-sectional view illustrating a conventional multi-layer ceramic capacitor;
FIGS. 2A and 2B illustrate electron probe micro analysis (EPMA) results analyzing mode of oxidization of internal electrodes in the conventional multi-layer ceramic capacitor;
FIG. 3 is a side cross-sectional view illustrating a multi-layer ceramic capacitor according to an exemplary embodiment of the invention;
FIGS. 4A and 4B are a side cross-sectional view and an exploded perspective view illustrating a multi-layer ceramic capacitor structure, respectively according to an exemplary embodiment of the invention; and
FIGS. 5A and 5B are scanning electron microscopy (SEM) pictures illustrating partial cross-section of different portions of a multi-layer ceramic capacitor structure manufactured according to an exemplary embodiment of the invention.

### DETAILED DESCRIPTION OF THE PREFERRED EMBODIMENT

Exemplary embodiments of the present invention will now be described in detail with reference to the accompanying drawings.

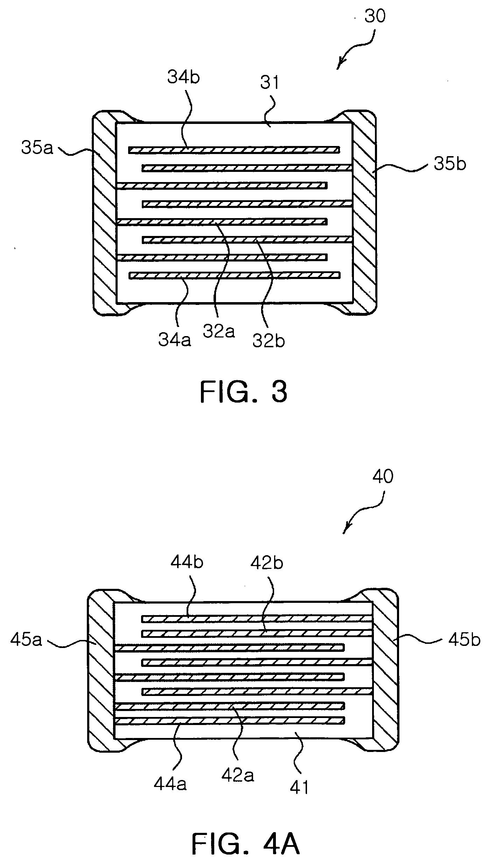

FIG. 3 is a side cross-sectional view illustrating a multi-layer ceramic capacitor according to an exemplary embodiment of the invention.

Referring to FIG. 3, the multi-layer ceramic capacitor 30 includes a ceramic sintered body 31 having first and second internal electrodes 32a and 32b.

Although not illustrated clearly in FIG. 3, the ceramic sintered body 31 is construed to include cover layers formed on upper and lower surfaces thereof as outermost layers and a plurality of ceramic layers disposed between the cover layers.

The ceramic sintered body 31 includes first and second external electrode 35a and 35b formed on opposing sides, and the first and second internal electrodes 32a and 32b are connected to the first and second external electrodes 35a and 35b, respectively while interposing a corresponding one of the ceramic layers therebetween.

The multi-layer ceramic capacitor 30 includes anti-oxidant electrode layers 34a and 34b disposed between the outermost layers (cover layers) and adjacent ceramic layers, respectively. As described above, the anti-oxidant electrode layers 34a and 34b prevent oxidization of the first and second internal electrodes located outermost when sintering is performed at a reducing atmosphere having an oxygen partial pressure regulated to control oxidization and electrical properties of the internal electrodes.

The anti-oxidant electrode layers 34a and 34b of the present embodiment are not connected to any of the first and second external electrodes 35a and 35b not to affect capacitance. In this case, to prevent oxidization more effectively, each of the anti-oxidant electrode layers 34a and 34b may have a width identical to or greater than a width of the first and second internal electrodes 32a and 32b, and may be extended in a length direction not to contact the first and second external electrode 35a and 35b. Here, even though not required in the present embodiment, the each anti-oxidant electrode layers 34a and 34b may be spaced apart at a distance of at least 5µm from the first and second external electrodes 35a and 35b, respectively to prevent oxidization of the first and second internal electrodes 32a and 32b effectively and minimize their effect on the electrical properties.

The anti-oxidant electrode layers 34a and 34b of the present embodiment may be formed of a metal material, and particularly a metal identical to materials for the first and second internal electrodes 32a and 32b. Generally, the internal electrodes made of nickel are sintered at a reducing atmosphere having the oxygen partial pressure regulated. Here, the anti-oxidant electrode layers 34a and 34b may be made of nickel.

In fact, in the multi-layer ceramic capacitor 30 of the present embodiment, the anti-oxidant electrode layers 34a and 34b may remain partially oxidized in the sintering process. As described above, in a case where the anti-oxidant electrode layers 34a and 34b are formed of an Ni layer, oxidized portions thereof may exist as an Mg-Ni-O phase.

Meanwhile, to prevent the Mg-Ni-O phase from being formed in the first and second internal electrodes 32a and 32b except the anti-oxidant electrode layers 34a and 34b, the cover layers may be adjusted in ratio of minor components. That is, as a general example, in a case where the cover layers contain BaTiO₃ as a major component and MgO as a minor component, MgO may represent 0.5mol or less with respect to 100 mol of BaTiO₃.

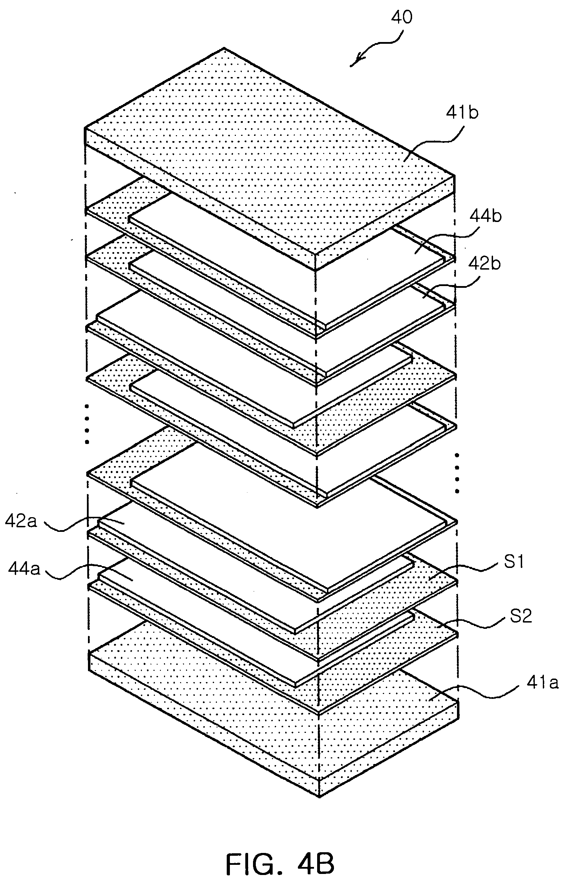

FIGS. 4A and 4B are a side cross-sectional view and an exploded perspective view illustrating a multi-layer ceramic capacitor structure, respectively according to an exemplary embodiment of the invention.

Referring to FIG. 4A, the multi-layer ceramic capacitor 40 includes a ceramic sintered body 41 having first and second internal electrode 42a and 42b.

As shown in the exploded perspective view of FIG. 4B, the ceramic sintered body 41 of FIG. 4A includes cover layers formed on upper and lower surfaces thereof as outermost layers, and a plurality of ceramic layers deposited between the cover layers. Also, the first and second internal electrodes 42a and 42b are arranged alternately while interposing a corresponding one of the ceramic layers to connect to the first and second external electrode 45a and 45b, respectively. The first and second internal electrodes 42a and 42b deposited to interpose the corresponding one of the ceramic layers is connected to the first and second external electrodes 45a and 45b formed on opposing sides, respectively, as shown in FIG. 4A.

Moreover, the multi-layer ceramic capacitor 40 includes cover layers 41a and 41b and anti-oxidant electrode layers 44a and 44b interposed between the cover layers 41a and adjacent ones of the ceramic layers, respectively.

As shown in FIG. 4A, each of the anti-oxidant electrode layers 44a and 44b of the present embodiment is connected to a corresponding one of the first and second external electrodes 45a and 45b having an identical polarity to an adjacent one of first and second internal electrodes, thereby not affecting capacitance. In this structure, as shown in FIG. 4, the each anti-oxidant electrode layer 44a and 44b may be formed with an area substantially identical to or greater than a corresponding one of the first and second internal electrodes to be protected, while substantially being superimposed on the corresponding internal electrode. This ensures the anti-oxidant electrode layers 44a and 44b to prevent oxidization more adequately.

The anti-oxidant electrode layer 44a and 44b may be spaced apart at a distance of at least 5µm from an unconnected one (45b or 45a) of the first and second external electrodes to effectively prevent oxidization of the first and second internal electrodes 42a and 42b and minimize their effect on the electrical properties.

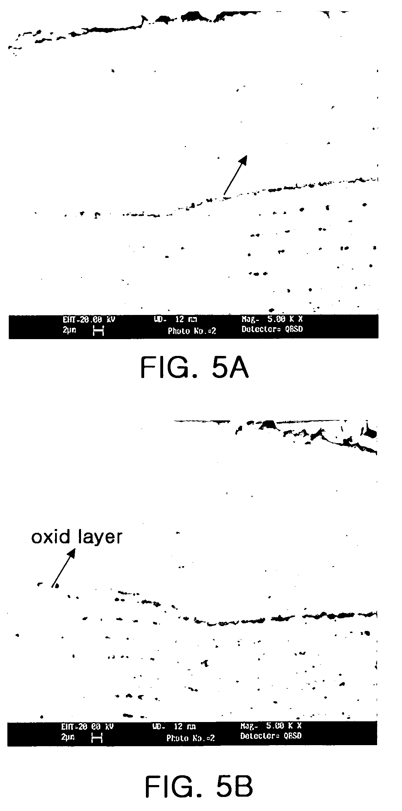

The anti-oxidant electrode layers 44a and 44b of the present embodiment may be formed of a metal material, and particularly a metal identical to materials for the first and second internal electrodes 42a and 42b. Also, as described with reference to FIG. 3, in the multi-layer ceramic capacitor 40 of the present embodiment, the anti-oxidant electrode layers 44a and 44b may remain partially oxidized in the sintering process. As described above, in a case where the anti-oxidant electrode layers 44a and 44b are formed of an Ni layer, oxidized portions thereof may exist as an Mg-Ni-O phase. This can be confirmed through following examples and FIGS. 5A and 5B.

In the embodiment shown in FIGS. 3 and 4A, one anti-oxidant electrode layer is employed in each corresponding location. However, the multi-layer ceramic capacitor may require greater anti-oxidation function depending on condition of the reducing atmosphere or thickness of the cover layers. Here, additional anti-oxidant electrode layers may be disposed after additionally providing additional ceramic layers adjacent to the internal electrodes located outermost, respectively. That is, a plurality of anti-oxidant electrode layers may be employed.

Hereinafter, operation and effects of the present invention will be described in greater detail by way of following examples.

### Inventive Example

To confirm improved effects of anti-oxidant electrode layers of the present invention, 120 multilayer ceramic capacitors with a size of X5R 1.6mm×0.8mm and structured as shown in FIGS. 4A and 4B, i.e., having each of anti-oxidant electrode layers connected to a corresponding same polarity were designed to have a capacitance of 22µF. Here, internal electrodes were formed of nickel and the anti-oxidant electrode layers were formed of nickel.

As described above, for the multilayer ceramic capacitors, sintering was performed at a reducing atmosphere having an oxygen partial pressure regulated. One of the completed multilayer ceramic capacitors was selected to have its cross-section SEM-photographed. FIGS. 5A and 5B are scanning electron microscopy (SEM) pictures illustrating cross-section of the multi-layer ceramic capacitor manufactured according to the present invention.

Referring to FIG. 5A, only the anti-oxidant electrode layer had an oxide layer partially formed thereon and the underlying one of the internal electrodes is observed not to have been oxidized. However, the oxide layer is slightly observed at a portion around an edge of the anti-oxidant electrode layer as in FIG. 5B. But this portion is a marginal area of the internal electrode, thus not directly influencing electrical properties such as capacitance.

### Comparative Example

To confirm improved effects of the multilayer capacitor of the present invention, 120 multilayer chip capacitors with a conventional structure (shown in FIG. 1) were manufactured under the same design conditions as the above Inventive Example. However, here, each of the multi-layer chip capacitors is not provided with an anti-oxidant electrode layer connected to an external electrode of a polarity identical to an adjacent internal electrode. For the multilayer ceramic capacitors manufactured according to Comparative Example, sintering was performed at a reducing atmosphere having an oxygen partial pressure regulated under identical conditions to the Inventive Example.

The multilayer ceramic capacitors manufactured according to Inventive Example and Conventional Example were measured for capacitance and various defect rates such as short occurrence rate, flash defect rate, cover crack occurrence rate. The results are noted in Table 1 below.

**Table 1**

| | Inventive Example | Comparative Example |
|---|---|---|
| Capacitance | 22.2µF | 21.9µF |
| short occurrence rate | 6% | 16% |
| Flash defect rate | 20% | 75% |
| cover crack occurrence rate | 3% | 30% |

As can be seen in Table 1 above, the multilayer ceramic capacitor of Inventive Example is noticeably improved in short occurrence rate, flash defect rate and cover crack occurrence rate. Also, Inventive Example showed better capacitance than Comparative Example. This is because in Comparative Example, the internal electrodes are partially oxidized, thus failing to increase capacitance, while in Inventive Example, the internal electrodes contributive to capacitance are protected by the anti-oxidant electrode layers, thus free from oxidation-induced loss. As described above, the anti-oxidant electrode layers of Inventive Example ensure the internal electrodes to have stable electrical properties by at least 80% to thereby prevent decrease in capacitance.

As set forth above, according to exemplary embodiments of the invention, anti-oxidant electrode layers not affecting capacitance are disposed adjacent to outermost internal electrodes, respectively to dramatically lower defects resulting from oxidization of internal electrodes when sintering is performed at a reducing atmosphere having an oxygen partial pressure regulated in order to inhibit oxidization of the internal electrodes and enhance electrical properties thereof.

While the present invention has been shown and described in connection with the exemplary embodiments, it will be apparent to those skilled in the art that modifications and variations can be made without departing from the scope of the invention as defined by the independent claims.

## Claims

1. A multi-layer ceramic capacitor (30) comprising:
a ceramic sintered body (31) having cover layers provided on upper and lower surfaces thereof as outermost layers and a plurality of ceramic layers disposed between the cover layers;
first (32a) and second (32b) internal electrodes formed on the ceramic layers, the first (32a) and second (32b) internal electrodes stacked to interpose one of the ceramic layers;
first (35a) and second (35b) external electrodes formed on opposing sides of the ceramic sintered body (31) to connect to the first (32a) and second (32b) internal electrodes, respectively; and
further electrode layers (34a, 34b) formed between the cover layers and adjacent ones of the ceramic layers, respectively;
**characterised by**:
each of the further electrode layers (34a, 34b) having a width identical to or greater than a width of the first (32a) and second (32b) internal electrodes, wherein the further electrode layers (34a, 34b) are extended in a length direction not to contact the first (35a) and second (35b) external electrodes, respectively.

2. The multi-layer ceramic capacitor of claim 1, wherein the further electrode layers (34a, 34b) comprise a material identical to materials for the first (32a) and second (32b) internal electrodes.

3. The multi-layer ceramic capacitor of claim 2, wherein the first (32a) and second (32b) internal electrodes and the further electrode layers (34a, 34b) each comprise an Ni layer.

4. The multi-layer ceramic capacitor of claim 1, wherein each of the further electrode layers (34a, 34b) has at least an oxidized portion.

5. The multi-layer ceramic capacitor of claim 4, wherein the oxidized portion of the further electrode layers (34a, 34b) is an Mg-Ni-O phase.

6. The multi-layer ceramic capacitor of any preceding claim, wherein each of the further electrode layers (34a, 34b) is spaced apart from the first (35a) and second (35b) external electrodes at a distance of at least 5µm, respectively.

7. A multi-layer ceramic capacitor comprising:
a ceramic sintered body (41) having cover layers (41a, 4ab) provided on upper and lower surfaces thereof as outermost layers and a plurality of ceramic layers disposed between the cover layers (41 a, 41 b);
first (42a) and second (42b) internal electrodes formed on the ceramic layers, the first (42a) and second (42b) internal electrodes stacked to interpose one of the ceramic layers;
first (45a) and second (45b) external electrodes formed on opposing sides of the ceramic sintered body (41) to connect to the first (42a) and second (42b) internal electrodes, respectively; and
further electrode layers (44a, 44b) formed between the cover layers (41 a, 41 b) and adjacent ones of the ceramic layers, respectively;
wherein each of the further electrode layers (44a, (44b) is connected to a corresponding one of the external electrodes (42a, 42b) having an identical polarity to an adjacent one of the first and second internal electrodes;
**characterised by** each of the further electrode layers (44a, 44b) being superimposed over the entire area of the adjacent one of the first (42a) and second (42b) internal electrodes.

8. The multi-layer ceramic capacitor of claim 7, wherein the further electrode layer is spaced apart at a distance of at least 5µm from a corresponding one of the first (42a) and second (42b) external electrodes not connected thereto.

9. The multi-layer ceramic capacitor of any preceding claim, wherein the further electrode layers (34a, 34b; 42a, 42b) adjacent to the first (32a, 42a) and second (32b, 42b) internal electrodes, respectively comprises a plurality of electrode layers.

10. The multi-layer ceramic capacitor of any preceding claim, wherein each of the cover layers (41a, 41b) comprises BaTiO₃ and MgO, wherein MgO represents 0.5 mol or less with respect to 100 mol of BaTiO₃.

## Patentansprüche

1. Mehrschichtiger Keramikkondensator (30), der Folgendes umfasst:
einen keramischen gesinterten Körper (31), der Abdeckungsschichten, die auf einer oberen und einer unteren Fläche desselben als äußerste Schichten bereitgestellt werden, und mehrere Keramikschichten, die zwischen den Abdeckungsschichten angeordnet sind, aufweist,
eine erste (32a) und eine zweite (32b) innere Elektrode, die auf den Keramikschichten geformt sind, wobei die erste (32a) und die zweite (32b) innere Elektrode gestapelt sind, um eine der Keramikschichten einzufügen,
eine erste (35a) und eine zweite (35b) äußere Elektrode, die auf entgegengesetzten Seiten des keramischen gesinterten Körpers (31) geformt sind, um sich jeweils mit der ersten (32a) beziehungsweise der zweiten (32b) inneren Elektrode zu verbinden, und
weitere Elektrodenschichten (34a, 34b), die jeweils zwischen den Abdeckungsschichten und angrenzenden Keramikschichten geformt sind,
**dadurch gekennzeichnet, dass**:
jede der weiteren Elektrodenschichten (34a, 34b) eine Breite aufweist, die identisch mit einer Breite der ersten (32a) und der zweiten (32b) inneren Elektrode oder größer als dieselbe ist, wobei die weiteren Elektrodenschichten (34a, 34b) in einer Längenrichtung ausgedehnt sind, um jeweils nicht die erste (35a) beziehungsweise die zweite (35b) äußere Elektrode zu berühren.

2. Mehrschichtiger Keramikkondensator nach Anspruch 1, wobei die weiteren Elektrodenschichten (34a, 34b) ein Material umfassen, das identisch mit Materialien für die erste (32a) und die zweite (32b) innere Elektrode ist.

3. Mehrschichtiger Keramikkondensator nach Anspruch 2, wobei die erste (32a) und die zweite (32b) innere Elektrode und die weiteren Elektrodenschichten (34a, 34b) jeweils eine Ni-Schicht umfassen.

4. Mehrschichtiger Keramikkondensator nach Anspruch 1, wobei jede der weiteren Elektrodenschichten (34a, 34b) wenigstens einen oxidierten Abschnitt aufweist.

5. Mehrschichtiger Keramikkondensator nach Anspruch 4, wobei der oxidierte Abschnitt der weiteren Elektrodenschichten (34a, 34b) eine Mg-Ni-O-Phase ist.

6. Mehrschichtiger Keramikkondensator nach einem der vorhergehenden Ansprüche, wobei jede der weiteren Elektrodenschichten (34a, 34b) jeweils von der ersten (35a) beziehungsweise der zweiten (35b) äußeren Elektrode bei einer Entfernung von wenigstens 5 µm beabstandet ist.

7. Mehrschichtiger Keramikkondensator, der Folgendes umfasst:
einen keramischen gesinterten Körper (41), der Abdeckungsschichten (41a, 41b), die auf einer oberen und einer unteren Fläche desselben als äußerste Schichten bereitgestellt werden, und mehrere Keramikschichten, die zwischen den Abdeckungsschichten (41a, 41b) angeordnet sind, aufweist,
eine erste (42a) und eine zweite (42b) innere Elektrode, die auf den Keramikschichten geformt sind, wobei die erste (42a) und die zweite (42b) innere Elektrode gestapelt sind, um eine der Keramikschichten einzufügen,
eine erste (45a) und eine zweite (45b) äußere Elektrode, die auf entgegengesetzten Seiten des keramischen gesinterten Körpers (41) geformt sind, um sich jeweils mit der ersten (42a) beziehungsweise der zweiten (42b) inneren Elektrode zu verbinden, und
weitere Elektrodenschichten (44a, 44b), die jeweils zwischen den Abdeckungsschichten (41a, 41b) und angrenzenden Keramikschichten geformt sind,
wobei jede der weiteren Elektrodenschichten (44a, 44b) mit einer entsprechenden der äußeren Elektroden (42a, 42b) verbunden ist, die eine identische Polarität mit einer benachbarten von der ersten und der zweiten inneren Elektrode aufweist,
**dadurch gekennzeichnet, dass** jede der weiteren Elektrodenschichten (44a, 44b) über der gesamten Fläche der benachbarten von der ersten (42a) und der zweiten (42b) inneren Elektrode angeordnet ist.

8. Mehrschichtiger Keramikkondensator nach Anspruch 7, wobei die weitere Elektrodenschicht bei einer Entfernung von wenigstens 5 µm von einer entsprechenden der ersten (45a) und der zweiten (45b) äußeren Elektrode, die nicht mit derselben verbunden ist, beabstandet ist.

9. Mehrschichtiger Keramikkondensator nach einem der vorhergehenden Ansprüche, wobei die weiteren Elektrodenschichten (34a, 34b; 42a, 42b), die jeweils der ersten (32a, 42a) beziehungsweise der zweiten (32b, 42b) inneren Elektrode benachbart sind, jeweils mehrere Elektrodenschichten umfassen.

10. Mehrschichtiger Keramikkondensator nach einem der vorhergehenden Ansprüche, wobei jede der Abdeckungsschichten (41a, 41b) BaTiO₃ und MgO umfasst, wobei MgO 0,5 mol oder weniger in Bezug auf 100 mol an BaTiO₃ darstellt.

## Revendications

1. Condensateur céramique multicouche (30), comprenant:
un corps fritté en céramique (31) comprenant des couches de couverture situées sur ses surfaces supérieure et inférieure en tant que couches extérieures et une pluralité de couches céramiques disposées entre les couches de couverture;
des première (32a) et seconde (32b) électrodes internes formées sur les couches céramiques, les première (32a) et seconde (32b) électrodes internes étant empilées en s'intercalant avec l'une des couches céramiques;
des première (35a) et seconde (35b) électrodes externes formées sur des côtés opposés du corps fritté en céramique (31) pour être connectées aux première (32a) et seconde (32b) électrodes internes, respectivement; et
des couches d'électrode supplémentaires (34a, 34b) formées entre les couches de couverture et les couches céramiques adjacentes, respectivement;
**caractérisé par le fait que**
chacune des couches d'électrode supplémentaires (34a, 34b) a une largeur supérieure ou égale à une largeur des première (32a) et seconde (32b) électrodes internes, les couches d'électrode supplémentaires (34a, 34b) s'étendant dans une direction longitudinale sans être en contact, respectivement, avec les première (35a) et seconde (35b) électrodes externes.

2. Condensateur céramique multicouche selon la revendication 1, les couches d'électrode supplémentaires (34a, 34b) étant constituées d'un matériau identique aux matériaux utilisés pour les première (32a) et seconde (32b) électrodes internes.

3. Condensateur céramique multicouche selon la revendication 2, les première (32a) et seconde (32b) électrodes internes et les couches d'électrode supplémentaires (34a, 34b) comprenant chacune une couche de Ni.

4. Condensateur céramique multicouche selon la revendication 1, chacune des couches d'électrode supplémentaires (34a, 34b) ayant au moins une partie oxydée.

5. Condensateur céramique multicouche selon la revendication 4, la partie oxydée des couches d'électrode supplémentaires (34a, 34b) étant une phase Mg-Ni-O.

6. Condensateur céramique multicouche selon l'une quelconque des revendications précédentes, chacune des couches d'électrode supplémentaires (34a, 34b) étant située à une distance d'au moins 5 µm des première (35a) et seconde (35b) électrodes externes, respectivement.

7. Condensateur céramique multicouche, comprenant:
un corps fritté en céramique (31) comprenant des couches de couverture (41a, 41b) situées sur ses surfaces supérieure et inférieure, formant les couches les plus extérieures, et une pluralité de couches céramiques disposées entre les couches de couverture (41a, 41b);
des première (42a) et seconde (42b) électrodes internes formées sur les couches céramiques, les première (42a) et seconde (42b) électrodes internes étant empilées en s'intercalant avec l'une des couches céramiques;
des première (45a) et seconde (45b) électrodes externes formées sur des côtés opposés du corps fritté en céramique (41) pour être connectées aux première (42a) et seconde (42b) électrodes internes, respectivement; et
des couches d'électrode supplémentaires (44a, 44b) formées entre les couches de couverture (41a, 41b) et les couches céramiques adjacentes, respectivement;
chacune des couches d'électrode supplémentaires (44a, 44b) étant connectée à une électrode correspondante des électrodes externes (42a, 42b) de polarité identique à une électrode adjacente des première et seconde électrodes internes;
**caractérisé par le fait que** chacune des couches d'électrode supplémentaires (44a, 44b) est superposée sur la totalité de la surface de l'électrode adjacente des première (42a) et seconde (42b) électrodes internes.

8. Condensateur céramique multicouche selon la revendication 7, la couche d'électrode supplémentaire étant située à une distance d'au moins 5 µm d'une électrode correspondante des première (42a) et seconde (42b) électrodes externes non connectée à elle.

9. Condensateur céramique multicouche selon l'une quelconque des revendications précédentes, les couches d'électrode supplémentaires (34a, 34b; 42a, 42b) adjacentes aux première (32a, 42a) et seconde (32b, 42b) électrodes internes, respectivement, comprenant une pluralité de couches d'électrode.

10. Condensateur céramique multicouche selon l'une quelconque des revendications précédentes, chacune des couches de couverture (41a, 41b) étant constituée de BaTiO₃ et MgO, MgO représentant 0,5 mol ou moins par rapport à 100 mol de BaTiO₃.
